# FASCICULE DE BREVET EUROPEEN

(11) **EP 4 062 488 B1**
(45) Date de publication et mention de la délivrance du brevet: **31.07.2024**
(21) Numéro de dépôt: 20803229.2
(22) Date de dépôt: 19.10.2020
(51) Int. Cl.: H01Q 1/22, H01Q 1/32, H01Q 15/00

(54) **DISPOSITIF DE DÉTECTION D'ÉLÉMENTS D'IDENTIFICATION À MÉTASURFACE(S) RELAIS, POUR UN SYSTÈME**
VORRICHTUNG ZUM DETEKTIEREN VON IDENTIFIKATIONSELEMENTEN MIT WEITERLEITENDER(N) METAFLÄCHE(N), FÜR EIN SYSTEM
DEVICE FOR DETECTING IDENTIFICATION ELEMENTS WITH RELAYING METASURFACE(S), FOR A SYSTEM

(30) Priorité: 18.11.2019 FR 1912826
(43) Date de publication de la demande: 28.09.2022
(73) Titulaire: Stellantis Auto SAS, 78300 Poissy (FR)
(72) Inventeur: BARRE, Laurent, 75011 PARIS (FR); DELPORTE, Denis Albert, 59267 PROVILLE (FR); DUVERGER, Pascal, 78590 NOISY LE ROI (FR)
(86) Numéro de dépôt international: PCT/FR2020/051876
(87) Numéro de publication internationale: WO 2021/099706

(56) Documents cités:
- FR-A1- 3 070 795
- US-A1- 2010 109 841
- US-B1- 9 652 646
- US-B2- 8 842 056
- ELEFTHERIADES G V ET AL: "Dispersion Analysis of the Shielded Sievenpiper Structure Using Multiconductor Transmission-Line Theory", IEEE MICROWAVE AND WIRELESS COMPONENTS LETTERS, IEEE SERVICE CENTER, NEW YORK, NY, US, vol. 14, no. 9, 1 September 2004 (2004-09-01), pages 434 - 436, XP011117289, ISSN: 1531-1309, DOI: 10.1109/LMWC.2004.832075

## Description

### Domaine technique de l'invention

L'invention concerne les systèmes qui comprennent au moins un espace fermé à environnement métallique et comportant au moins un objet muni d'un élément d'identification émetteur/récepteur d'ondes, et plus précisément la détection des éléments d'identification dans de tels systèmes.

### Etat de la technique

Certains systèmes comprennent au moins un espace fermé dans lequel peuvent être logés, plus ou moins temporairement, des objets munis d'un élément d'identification émetteur/récepteur d'ondes. C'est par exemple le cas, bien que non limitativement, de certains véhicules (comme par exemple des véhicules utilitaires ou des camions (éventuellement à remorque)).

Généralement, les ondes émises ont des fréquences appartenant au domaine des radiofréquences (RF), et les éléments d'identification sont des étiquettes d'identification (ou marqueurs) radio fréquence comportant une puce électronique associée à une antenne RF. On parle alors d'identification radio fréquence (ou RFID (« Radio Frequency Identification »)).

Afin de détecter si les objets précités sont présents dans l'espace fermé d'un système, il a été proposé d'installer dans cet espace fermé un lecteur d'identification chargé d'échanger des messages avec les éléments d'identification de ces objets via une antenne émettrice/réceptrice d'ondes. On notera que l'antenne émettrice/réceptrice d'ondes peut éventuellement faire partie du boîtier du lecteur d'identification, mais cela n'est pas obligatoire. En cas de dissociation, l'antenne et le lecteur d'identification sont généralement couplés via un câble.

Lorsque l'espace fermé à un environnement métallique, comme par exemple lorsqu'il est défini par une caisse de véhicule, il arrive fréquemment que la détection ne se fasse pas bien, et donc que des éléments d'identification présents dans l'espace fermé ne soient pas détectés (par masquage par au moins un autre objet voisin et/ou par un élément métallique et/ou par collision des ondes RF) ou au contraire que des éléments d'identification situés à l'extérieur de l'espace fermé soient détectés. Ce problème de détection incomplète et/ou externe résulte non seulement du positionnement de l'antenne émettrice/réceptrice d'ondes par rapport aux objets dans l'espace fermé mais également de la configuration et de l'environnement métallique de ce dernier.

Actuellement, pour remédier partiellement au problème précité, on associe plusieurs antennes au lecteur d'identification, et on positionne ces antennes en différents endroits de l'espace fermé (par exemple sur les côtés, sur le plafond et sur le plancher). Or, cela augmente non seulement les coûts mais aussi la probabilité de détecter un objet à l'extérieur de l'espace fermé, et donc cela contraint de rajouter des antennes à l'extérieur de l'espace fermé pour limiter les fausses détections (par une discrimination intérieur/extérieur). Mais se pose également un problème de positionnement d'une antenne par rapport à la porte contrôlant l'accès à l'espace fermé. D'autres méthodes sont divulguées dans US 2010/109841 A1 et US 9 652 646 B1.

L'invention a donc notamment pour but d'améliorer la situation.

### Présentation de l'invention

Elle propose notamment à cet effet un dispositif de détection, selon la revendication 1.

On entend ici par « métasurface » une surface ayant une épaisseur inférieure à la longueur d'onde des ondes qu'elle doit réfléchir et réalisée dans un métamatériau structuré (avec des motifs horizontaux ayant une taille inférieure à la longueur d'onde précitée) ou non structuré. Un métamatériau est un matériau composite artificiel présentant des propriétés électromagnétiques que ne possède pas un matériau naturel, et en particulier une capacité à moduler le comportement des ondes électromagnétiques grâce à des conditions aux limites particulières.

Grâce à l'invention, on augmente très notablement la probabilité d'atteindre les objets à identifier et la probabilité d'atteindre l'antenne, et donc on optimise l'identification des objets présents dans un espace fermé à environnement métallique.

Le dispositif de détection selon l'invention peut comporter d'autres caractéristiques qui peuvent être prises séparément ou en combinaison, et notamment :
- le processeur et la mémoire peuvent être agencés, en cas d'ouverture d'au moins une porte contrôlant un accès à l'espace fermé, pour effectuer les opérations consistant à déterminer une troisième loi de réflexion des ondes issues de l'antenne vers une zone comportant l'accès et une quatrième loi de réflexion des ondes issues de cette zone comportant l'accès vers l'antenne, puis à déterminer une configuration de la métasurface configurable en fonction de ces troisième et quatrième lois déterminées, puis à déclencher une instauration de cette configuration par la métasurface configurable ;
- chaque première loi peut être destinée à provoquer une réflexion des ondes qui est choisie parmi une réflexion selon des directions successives parallèles entre elles et constituant des génératrices d'un cylindre de révolution d'un rayon choisi par au moins une zone choisie de la métasurface et une réflexion selon une unique direction à partir de zones choisies de la métasurface qui sont alignées sur une droite choisie ;
- les ondes émises peuvent avoir des fréquences qui appartiennent au domaine des radiofréquences ;

L'invention propose également un système comprenant un espace fermé à environnement métallique et au moins un dispositif de détection du type de celui présenté ci-avant.

Par exemple, ce système peut constituer un véhicule.

Dans ce cas, il peut, par exemple, constituer un véhicule utilitaire dans lequel l'espace fermé est défini par une caisse au moins partiellement métallique et comprenant une paroi supérieure définissant un toit et comportant une face interne sur laquelle est solidarisée chaque métasurface, ou bien un camion dans lequel l'espace fermé est une caisse ou une remorque au moins partiellement métallique et comprenant une paroi supérieure définissant un toit et comportant une face interne sur laquelle est solidarisée chaque métasurface.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement un exemple de camion comprenant un espace fermé comportant des objets munis d'éléments d'identification et un exemple de réalisation d'un dispositif de détection selon l'invention, utilisant un premier exemple de premières et secondes lois de réflexion,
[Fig. 2] illustre schématiquement et fonctionnellement le camion de la figure 1 avec son dispositif de détection utilisant un deuxième exemple de premières et secondes lois de réflexion,
[Fig. 3] illustre schématiquement et fonctionnellement le camion de la figure 1 avec son dispositif de détection utilisant un exemple de troisième et quatrième lois de réflexion en présence de la porte d'accès ouverte, et
[Fig. 4] illustre schématiquement et fonctionnellement un exemple de réalisation d'un calculateur d'un dispositif de détection selon l'invention.

### Description détaillée de l'invention

L'invention a notamment pour but de proposer un dispositif de détection DD destiné à équiper un système S, comprenant un espace fermé EF ayant un environnement métallique et dans lequel peuvent être placés des objets O munis chacun d'un élément d'identification EI émetteur/récepteur d'ondes, afin de détecter la présence de ces objets O.

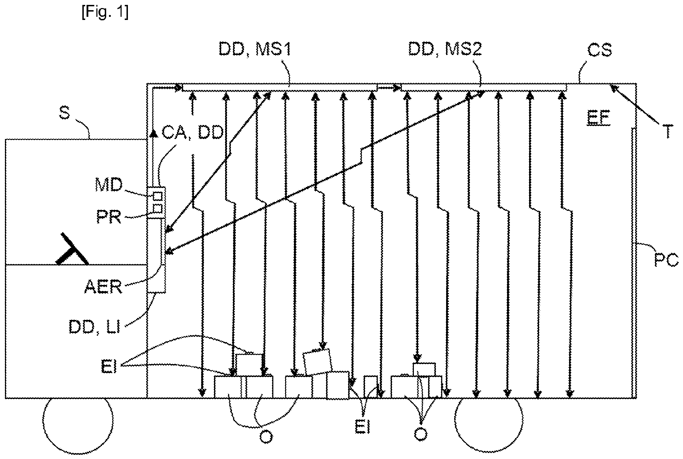

Dans ce qui suit, on considère, à titre d'exemple non limitatif, que le système S est un véhicule. Il s'agit par exemple d'un camion, comme illustré non limitativement sur les figures 1 à 3. Mais l'invention n'est pas limitée à ce type de système. Elle concerne en effet tout type de système comprenant au moins un espace fermé ayant un environnement métallique et dans lequel peuvent être placés des objets munis d'un élément d'identification émetteur/récepteur d'ondes. Ainsi, elle concerne les véhicules terrestres (et en particulier les véhicules utilitaires et les camions (avec ou sans remorque)), les bateaux, les aéronefs, les coffres-forts, les bâtiments et les installations (éventuellement industrielles).

On a schématiquement représenté sur les figures 1 à 3 un système S (ici un camion) comprenant un espace fermé EF ayant un environnement métallique et comportant des objets O munis chacun d'un élément d'identification EI et un exemple de réalisation d'un dispositif de détection DD selon l'invention.

Dans cet exemple, le système S est un véhicule, et plus précisément un camion comprenant une caisse CS, solidarisée fixement à son châssis, au moins partiellement métallique, et définissant un espace fermé EF dont l'accès est contrôlé par au moins une porte PC. On notera que la caisse CS pourrait faire partie d'une remorque.

Les objets O logés dans l'espace fermé EF peuvent être de tout type. Ainsi, il peut s'agir, par exemple, de paquets (ou colis) devant être transportés ou de matériels (comme par exemple des outils (perceuse, visseuse, disqueuse, scie électrique, etc)). On notera que l'invention s'applique dès lors qu'il y a au moins un objet O présent dans l'espace fermé EF et muni d'un élément d'identification EI émetteur/récepteur d'ondes.

Un élément d'identification EI émetteur/récepteur d'ondes comprend une antenne émettrice/réceptrice d'ondes associée à une puce électronique qui est la plupart du temps en veille et est réveillée et alimentée en énergie par des ondes spécifiques qu'elle reçoit d'une antenne associée à un lecteur d'identification. Cette puce électronique stocke au moins un identifiant qui représente l'objet auquel elle est associée.

Comme illustré sur les figures 1 à 3, un dispositif de détection DD, selon l'invention, comprend un lecteur d'identification LI, au moins une antenne AER émettrice/réceptrice d'ondes, et au moins une métasurface MSj.

Il est rappelé que l'on entend ici par « métasurface » une surface ayant une épaisseur inférieure à la longueur d'onde des ondes qu'elle doit réfléchir et réalisée dans un métamatériau qui peut être structuré avec des motifs horizontaux ayant une taille inférieure à la longueur d'onde précitée ou non structuré. Un métamatériau est un matériau composite artificiel présentant des propriétés électromagnétiques que ne possède pas un matériau naturel, et en particulier une capacité à moduler le comportement des ondes électromagnétiques grâce à des conditions aux limites particulières.

L'antenne AER est destinée à être installée dans l'espace fermé EF. On notera qu'elle peut faire partie du boîtier du lecteur d'identification LI, comme dans l'exemple illustré non limitativement sur les figures 1 à 3. Mais cela n'est pas obligatoire. En effet, elle peut être distante (ou déportée) du boîtier du lecteur d'identification LI, tout en étant couplée à ce dernier (LI), par exemple via un câble.

Dans ce qui suit, on considère, à titre d'exemple non limitatif, que les ondes émises par l'antenne AER et par chaque élément d'identification EI ont des fréquences appartenant au domaine des radiofréquences (ou RF). Par conséquent, on effectue ici des identifications radiofréquences (ou RFID (Radio Frequency Identification)). Mais l'invention n'est pas limitée aux ondes appartenant au domaine des radiofréquences. Elle concerne en effet tout domaine de fréquences non dangereux pour l'homme.

Par ailleurs, on considère dans ce qui suit, à titre d'exemple non limitatif, que le dispositif de détection DD ne comprend qu'une seule antenne AER. Mais il pourrait en comprendre plusieurs (au moins deux).

Le lecteur d'identification LI est agencé de manière à échanger des messages avec chaque élément d'identification EI présent dans l'espace fermé EF, via l'antenne EAR, afin de détecter sa présence. Par exemple, il peut être agencé pour déterminer si des objets sont absents dans l'espace fermé EF en comparant les identifiants reçus des éléments d'identification EI à une liste d'identifiants stockée, ou seulement pour enregistrer tous les identifiants reçus des éléments d'identification EI, ou pour comparer un précédent chargement avec le chargement actuel, ou bien pour alerter quand un élément d'identification EI n'est plus présent dans l'espace fermé l'EF.

Chaque métasurface MSj est destinée à être installée dans l'espace fermé EF. Dans l'exemple illustré non limitativement sur les figures 1 à 3, chaque métasurface MSj est solidarisé fixement sur la face interne de la paroi supérieure T de la caisse CS qui constitue le toit. Mais une métasurface MSj peut être installée en tout autre endroit d'un espace fermé, dès lors que cet endroit permet de renvoyer efficacement les ondes vers les objets O (et plus précisément vers leurs éléments d'identification EI) et vers l'antenne AER.

Par ailleurs, dans l'exemple illustré non limitativement sur les figures 1 à 3, le dispositif de détection DD comprend deux métasurfaces MSj. Mais le nombre de métasurfaces MSj peut prendre n'importe quelle valeur supérieure ou égale à un (1).

Chaque métasurface MSj est configurée de manière à réfléchir, et éventuellement aussi à moduler (éventuellement l'intensité), selon au moins une première loi choisie les ondes qui sont issues de l'antenne AER et destinées à (aux) élément(s) d'identification EI et selon au moins une seconde loi choisie des ondes issues d'un (des) élément(s) d'identification EI et destinées à l'antenne AER.

En d'autres termes, chaque métasurface MSj dispose d'une configuration qui permet, d'une part, de renvoyer les ondes qu'elle reçoit de l'antenne AER en direction d'une partie au moins de l'espace fermé EF (là où sont placés certains au moins des objets O), et, d'autre part, les ondes qu'elle reçoit d'un ou plusieurs objets O en direction de l'antenne AER. Elle agit donc en tant que relais d'ondes bidirectionnel. Cela permet d'augmenter très notablement la probabilité d'atteindre les objets à identifier et la probabilité d'atteindre l'antenne AER, et donc d'optimiser l'identification des objets O présents dans l'espace fermé EF à environnement métallique.

Dans l'exemple illustré non limitativement sur la figure 1, la première métasurface MS1 (j = 1, la plus à gauche) dispose d'une première configuration lui permettant de réfléchir les ondes issues de l'antenne AER vers une première zone où est située une première partie des objets O selon une première première loi choisie et les ondes issues des objets O de cette première partie vers l'antenne AER selon une première seconde loi choisie, et la seconde métasurface MS2 (j = 2, la plus à droite) dispose d'une seconde configuration lui permettant de réfléchir les ondes issues de l'antenne AER vers une seconde zone où est située une seconde partie des objets O selon une seconde première loi choisie et les ondes issues des objets O de cette seconde partie vers l'antenne AER selon une seconde seconde loi choisie.

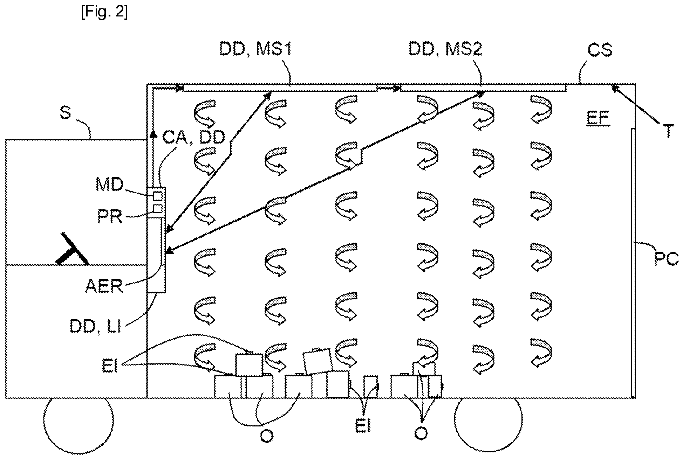

Dans l'exemple illustré non limitativement sur la figure 2, la première métasurface MS1 dispose d'une troisième configuration lui permettant de réfléchir les ondes issues de l'antenne AER vers la première zone où est située la première partie des objets O selon une troisième première loi choisie et les ondes issues des objets O de cette première partie vers l'antenne AER selon une troisième seconde loi choisie, et la seconde métasurface MS2 dispose d'une quatrième configuration lui permettant de réfléchir les ondes issues de l'antenne AER vers la seconde zone où est située la seconde partie des objets O selon une quatrième première loi choisie et les ondes issues des objets O de cette seconde partie vers l'antenne AER selon une quatrième seconde loi choisie.

Comme illustré non limitativement sur les figures 1 à 3, chaque métasurface être avantageusement configurable, et le dispositif de détection DD comprendre un calculateur CA comportant au moins un processeur PR et au moins une mémoire MD.

On entend ici par « métasurface configurable » une métasurface pouvant être configurée par programmation. A cet effet, on peut utiliser, par exemple, des métasurfaces dite de Huygens (ou optiques). Ainsi, on peut utiliser des métasurfaces contrôlables électriquement ou mécaniquement ou optiquement ou encore thermiquement. Dans le cas d'un contrôle mécanique, la métasurface peut, par exemple, comprendre des diodes associées à des systèmes micro-électro-mécaniques (ou MEMS (« Micro ElectroMechanical System »)) qui sont eux-mêmes contrôlés par des circuits intégrés de type FPGA (« Field Programmable Gate Array ») ou des microcontrôleurs programmables ou des puces programmables à système intégré (ou PSoC (« Programmable System on a Chip)) ou encore des dispositifs logiques programmables éventuellement complexes (ou (C)PLD (« (Complex) Programmable Logic Device »)).

Le calculateur CA est réalisé sous la forme d'une combinaison de circuits ou composants électriques ou électroniques (ou « hardware ») et de modules logiciels (ou « software »), du fait qu'il comprend au moins un processeur PR et au moins une mémoire MD.

Par exemple, le processeur PR peut être un processeur de signal numérique (ou DSP (« Digital Signal Processor »)). Ce processeur PR peut comprendre des circuits intégrés (ou imprimés), ou bien plusieurs circuits intégrés (ou imprimés) reliés par des connections filaires ou non filaires. On entend par circuit intégré (ou imprimé) tout type de dispositif apte à effectuer au moins une opération électrique ou électronique.

La mémoire MD est vive afin de stocker des instructions pour la mise en oeuvre par le processeur PR d'un programme informatique.

Le processeur PR et la mémoire MD sont agencés pour effectuer les opérations consistant à déterminer chaque première loi et chaque seconde loi en fonction de l'environnement métallique et de la configuration de l'espace fermé EF, puis à déterminer chaque configuration d'une métasurface configurable MSj en fonction de ces première et seconde lois déterminées, puis à déclencher l'instauration par chaque métasurface configurable MSj de chaque configuration la concernant et aussi éventuellement à ajuster la puissance de l'antenne AER par l'intermédiaire du lecteur d'identification LI (en cas de besoin).

Cela peut notamment permettre d'adapter le dispositif de détection DD en fonction de l'espace fermé EF considéré et/ou des objets O présents dans ce dernier (EF) et/ou des zones où sont placés les objets O.

Cela peut aussi permettre l'instauration de plusieurs configurations différentes (éventuellement successivement) au sein d'un même espace fermé EF afin d'augmenter encore plus la probabilité d'identifier les objets O. A cet effet, le processeur PR et la mémoire MD peuvent être agencés pour effectuer les opérations consistant à déterminer au moins deux premières lois et une seconde loi en fonction de l'environnement métallique et de la configuration de l'espace fermé EF, puis à déterminer une première configuration de chaque métasurface configurable MSj en fonction de l'une de ces premières lois déterminées et de cette seconde loi déterminée, et une seconde configuration de chaque métasurface configurable MSj en fonction de l'autre de ces premières lois déterminées et de la seconde loi déterminée, puis à déclencher des instaurations successives de ces première et seconde configurations par chaque métasurface configurable MSj. En d'autres termes, on instaure la première configuration pour effectuer une première détection de présence (ou identification), puis on instaure la seconde configuration pour effectuer une seconde détection de présence (ou identification), complémentaire de la première détection de présence.

On notera que le processeur PR et la mémoire MD peuvent être aussi agencés, en cas d'ouverture de la (d'au moins une) porte PC contrôlant l'accès à l'espace fermé EF, pour effectuer les opérations consistant à déterminer une troisième loi de réflexion des ondes issues de l'antenne AER vers une zone comportant cet accès et une quatrième loi de réflexion des ondes issues de cette zone comportant l'accès vers l'antenne AER, puis pour déterminer une configuration de chaque métasurface configurable MSj en fonction de ces troisième et quatrième lois déterminées, puis à déclencher une instauration de cette configuration par chaque métasurface configurable MSj concernée.

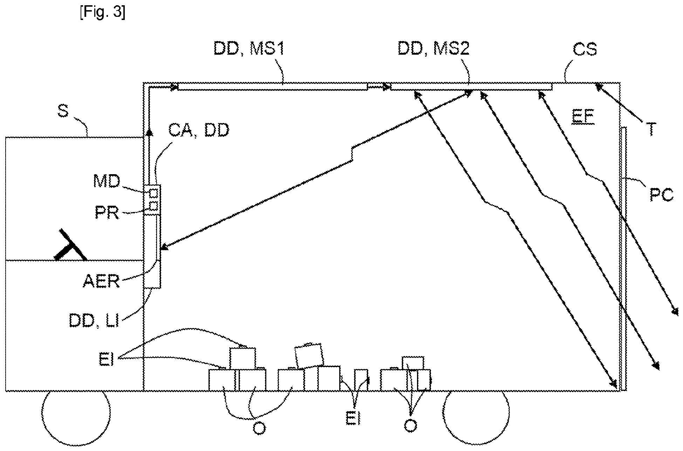

C'est notamment le cas dans l'exemple illustré non limitativement sur la figure 3. Dans cet exemple la première métasurface configurable MS1 n'est pas utilisée car l'objectif est d'identifier des objets entrant dans (ou sortant de) l'espace fermé EF par la porte d'accès PC ouverte. En revanche, la seconde métasurface configurable MS2 dispose d'une cinquième configuration lui permettant de réfléchir les ondes issues de l'antenne AER vers une troisième zone contenant l'ouverture de la porte PC selon une troisième loi choisie et les ondes issues des objets O présents dans cette troisième zone vers l'antenne AER selon une quatrième loi choisie.

On notera également que chaque première loi peut être destinée à provoquer une réflexion des ondes selon des directions successives parallèles entre elles et constituant des génératrices d'un cylindre de révolution d'un rayon choisi par au moins une zone choisie d'au moins une métasurface (configurable) MSj (cas de la figure 2), ou bien une réflexion selon une unique direction à partir de zones choisies d'au moins une métasurface (configurable) MSj qui sont alignées sur une droite choisie (cas de la figure 1). Dans l'exemple illustré non limitativement sur la figure 2, plusieurs zones de chaque métasurface configurable MSj réfléchissent (et éventuellement modulent), en même temps ou successivement, les ondes issues de l'antenne AER, en donnant l'impression qu'elles ont un mouvement en hélice du fait que dans chaque zone ce sont des sous-zones qui agissent successivement.

Dans l'exemple illustré non limitativement sur la figure 1, plusieurs zones de chaque métasurface configurable MSj réfléchissent (ou modulent) les ondes issues de l'antenne AER, en même temps ou successivement (par exemple de gauche à droite, ou inversement, en donnant l'impression que l'on effectue un balayage dans l'espace fermé EF). On peut envisager d'instaurer successivement la configuration aboutissant à l'exemple de la figure 1 puis la configuration aboutissant à l'exemple de la figure 2 (ou inversement).

Mais d'autres premières lois peuvent être utilisées, et notamment une première loi permettant des réflexions selon des directions différentes, par exemple contenues sensiblement dans un tronc de cône.

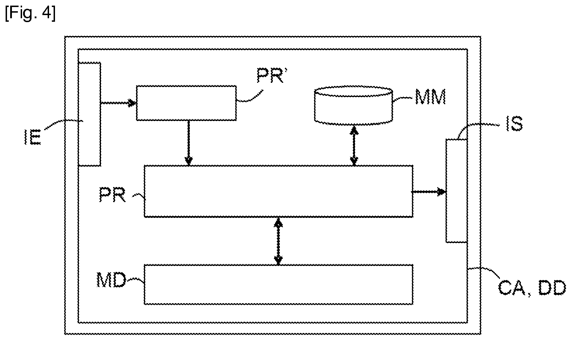

On notera également, comme illustré non limitativement sur la figure 4, que le calculateur CA du dispositif de détection DD, qui comprend déjà la mémoire vive MD et le processeur PR, peut aussi comprendre une mémoire de masse MM, notamment pour le stockage de données définissant l'environnement métallique et/ou la configuration de l'espace fermé EF, et de données intermédiaires intervenant dans tous ses calculs et traitements. Par ailleurs, ce calculateur CA peut aussi comprendre une interface d'entrée IE pour la réception d'au moins les données définissant l'environnement métallique et/ou la configuration de l'espace fermé EF, pour les utiliser dans des calculs ou traitements, éventuellement après les avoir mises en forme et/ou démodulées et/ou amplifiées, de façon connue en soi, au moyen d'un processeur de signal numérique PR'. De plus, ce calculateur CA peut aussi comprendre au moins une interface de sortie IS, notamment pour délivrer des définitions des configurations déterminées et de piloter le lecteur d'identification LI et chaque antenne AER (via des interfaces de programmation (ou APIs (« Application Programming Interface »)) du lecteur d'identification LI).

## Revendications

1. Dispositif de détection (DD) pour un système (S) comprenant un espace fermé (EF) à environnement métallique et comportant au moins un objet (O) muni d'un élément d'identification (EI) émetteur/récepteur d'ondes, ledit dispositif (DD) comprenant un lecteur d'identification (LI) échangeant des messages avec ledit élément d'identification (EI), via au moins une antenne (AER) émettrice/réceptrice d'ondes et destinée à être installée dans ledit espace fermé (EF), afin de détecter sa présence, **caractérisé en ce qu'**il comprend en outre au moins une métasurface (MSj) destinée à être installée dans ledit espace fermé (EF) et configurée de manière à réfléchir selon au moins une première loi choisie des ondes issues de ladite antenne (AER) et destinées audit élément d'identification (EI) et selon au moins une seconde loi choisie des ondes issues dudit élément d'identification (EI) et destinées à ladite antenne (AER), et **en ce que** chaque métasurface (MSj) est configurable, et **en ce qu'**il comprend un calculateur (CA) comportant au moins un processeur (PR) et au moins une mémoire (MD) agencés pour effectuer les opérations consistant à déterminer chaque première loi et chaque seconde loi en fonction dudit environnement métallique et d'une configuration dudit espace fermé (EF), puis à déterminer chaque configuration de ladite métasurface configurable (MSj) en fonction desdites première et seconde lois déterminées, puis à déclencher une instauration de chaque configuration par ladite métasurface configurable (MSj).

2. Dispositif selon la revendication 1, **caractérisé en ce que** ledit processeur (PR) et ladite mémoire (MD) sont agencés pour effectuer les opérations consistant à déterminer au moins deux premières lois et une seconde loi en fonction dudit environnement métallique et de ladite configuration de l'espace fermé (EF), puis à déterminer une première configuration de ladite métasurface configurable (MSj) en fonction de l'une desdites premières lois déterminées et de ladite seconde loi déterminée et une seconde configuration de ladite métasurface configurable (MSj) en fonction de l'autre desdites premières lois déterminées et de ladite seconde loi déterminée, puis à déclencher des instaurations successives desdites première et seconde configurations par ladite métasurface configurable (MSj).

3. Dispositif selon la revendication 1 ou 2, **caractérisé en ce que** ledit processeur (PR) et ladite mémoire (MD) sont agencés, en cas d'ouverture **d'au moins une** porte (PC) contrôlant un accès audit espace fermé (EF), pour effectuer les opérations consistant à déterminer une troisième loi de réflexion des ondes issues de ladite antenne (AER) vers une zone comportant ledit accès et une quatrième loi de réflexion des ondes issues de ladite zone comportant l'accès vers ladite antenne (AER), puis à déterminer une configuration de ladite métasurface configurable (MSj) en fonction desdites troisième et quatrième lois déterminées, puis à déclencher une instauration de cette configuration par ladite métasurface configurable (MSj).

4. Dispositif selon l'une des revendications 1 à 3, **caractérisé en ce que** chaque première loi est destinée à provoquer une réflexion desdites ondes qui est choisie parmi une réflexion selon des directions successives parallèles entre elles et constituant des génératrices d'un cylindre de révolution d'un rayon choisi par au moins une zone choisie de ladite métasurface (MSj) et une réflexion selon une unique direction à partir de zones choisies de ladite métasurface (MSj) qui sont alignées sur une droite choisie.

5. Dispositif selon l'une des revendications 1 à 4, **caractérisé en ce que** lesdites ondes ont des fréquences appartenant au domaine des radiofréquences.

6. Système (S) comprenant un espace fermé (EF) à environnement métallique, **caractérisé en ce qu'**il comprend au moins un dispositif de détection (DD) selon l'une des revendications précédentes.

7. Système selon la revendication 7, **caractérisé en ce qu'**il constitue un véhicule.

8. Système selon la revendication 8, **caractérisé en ce qu'**il constitue un véhicule utilitaire dans lequel ledit espace fermé (EF) est défini par une caisse au moins partiellement métallique et comprenant une paroi supérieure définissant un toit et comportant une face interne sur laquelle est solidarisée chaque métasurface (MSj), ou un camion dans lequel ledit espace fermé (EF) est une caisse ou une remorque au moins partiellement métallique et comprenant une paroi supérieure définissant un toit et comportant une face interne sur laquelle est solidarisée chaque métasurface (MSj).

## Patentansprüche

1. Detektionsvorrichtung (DD) für ein System (S), das einen geschlossenen Raum (EF) mit einer metallischen Umgebung umfasst und mindestens ein Objekt (O) umfasst, das mit einem Wellensender/Empfänger-Identifikationselement (EI) versehen ist, wobei die Vorrichtung (DD) Folgendes umfasst: ein Identifikationslesegerät (LI), das Nachrichten mit dem Identifikationselement (EI) über mindestens eine Antenne (AER) austauscht, die Wellen sendet/empfängt und dazu bestimmt ist, in dem geschlossenen Raum (EF) installiert zu werden, um dessen Anwesenheit zu erkennen, **dadurch gekennzeichnet dass** es außerdem mindestens eine Metaoberfläche ( MSj ) umfasst, die dazu bestimmt ist, in dem geschlossenen Raum (EF) installiert zu werden und so konfiguriert ist, dass sie gemäß mindestens einem ersten gewählten Gesetz Wellen reflektiert, die von der Antenne (AER) kommen und für die Identifizierung bestimmt sind Element (EI) und gemäß mindestens einem zweiten gewählten Wellengesetz, das von dem Identifizierungselement (EI) kommt und für die Antenne (AER) bestimmt ist, und dass jede Metaoberfläche ( MSj ) konfigurierbar ist und dass sie einen Rechner umfasst (CA), das mindestens einen Prozessor (PR) und mindestens einen Speicher (MD) umfasst, der so angeordnet ist, dass er die Operationen ausführt, die darin bestehen, jedes erste Gesetz und jedes zweite Gesetz als Funktion der metallischen Umgebung und einer Konfiguration des geschlossenen Raums zu bestimmen ( EF), dann jede Konfiguration der konfigurierbaren Metaoberfläche ( MSj ) als Funktion der ersten und zweiten bestimmten Gesetze zu bestimmen und dann eine Einrichtung jeder Konfiguration durch die konfigurierbare Metaoberfläche ( MSj ) auszulösen.

2. Vorrichtung nach Anspruch 1, **dadurch gekennzeichnet, dass** der Prozessor (PR) und der Speicher (MD) so ausgelegt sind, dass sie die Operationen ausführen, die darin bestehen, mindestens zwei erste Gesetze und ein zweites Gesetz in Abhängigkeit von der metallischen Umgebung und der Konfiguration zu bestimmen des geschlossenen Raums (EF), dann Bestimmen einer ersten Konfiguration der konfigurierbaren Metaoberfläche ( MSj ) als Funktion eines der ersten bestimmten Gesetze und des zweiten bestimmten Gesetzes und einer zweiten Konfiguration der konfigurierbaren Metaoberfläche ( MSj ) als Funktion davon andere der ersten bestimmten Gesetze und der zweiten bestimmten Gesetze, um dann aufeinanderfolgende Etablierungen der ersten und zweiten Konfigurationen durch die konfigurierbare Metaoberfläche ( MSj ) auszulösen.

3. Vorrichtung nach Anspruch 1 oder 2, **dadurch gekennzeichnet, dass** der Prozessor (PR) und der Speicher (MD) dazu ausgelegt sind, im Falle des Öffnens **mindestens einer** Tür (PC), die den Zugang zum geschlossenen Raum (EF) steuert, zu transportieren Ausführen der Operationen, die darin bestehen, ein drittes Gesetz der Reflexion von Wellen, die von der Antenne (AER) kommen, in Richtung einer Zone, die den Zugang umfasst, und ein viertes Gesetz der Reflexion von Wellen, die von der Zone kommen, die Zugang enthält, in Richtung der Antenne (AER) zu bestimmen, und dann zu bestimmen eine Konfiguration der konfigurierbaren Metaoberfläche ( MSj ) gemäß dem dritten und vierten bestimmten Gesetz, um dann eine Einrichtung dieser Konfiguration durch die konfigurierbare Metaoberfläche ( MSj ) auszulösen.

4. Vorrichtung nach einem der Ansprüche 1 bis 3, **dadurch gekennzeichnet, dass** jedes erste Gesetz dazu bestimmt ist, eine Reflexion der Wellen zu bewirken, die aus einer Reflexion in aufeinanderfolgenden Richtungen ausgewählt wird, die zueinander parallel sind und Generatoren eines Rotationszylinders d eines ausgewählten Strahls bilden durch mindestens eine ausgewählte Zone der Metaoberfläche ( MSj ) und eine Reflexion in einer einzigen Richtung von ausgewählten Zonen der Metaoberfläche ( MSj ), die auf einer ausgewählten geraden Linie ausgerichtet sind.

5. Vorrichtung nach einem der Ansprüche 1 bis 4, **dadurch gekennzeichnet, dass** die Wellen Frequenzen aufweisen, die zum Hochfrequenzbereich gehören.

6. System (S), umfassend einen geschlossenen Raum (EF) mit metallischer Umgebung, **dadurch gekennzeichnet, dass** es mindestens eine Detektionsvorrichtung (DD) nach einem der vorhergehenden Ansprüche umfasst.

7. System nach Anspruch 7, **dadurch gekennzeichnet, dass** es ein Fahrzeug darstellt.

8. System nach Anspruch 8, **dadurch gekennzeichnet, dass** es ein Nutzfahrzeug darstellt, bei dem der geschlossene Raum (EF) durch einen zumindest teilweise metallischen Körper definiert wird und eine obere Wand umfasst, die ein Dach definiert, und eine Innenfläche umfasst, an der jede Metaoberfläche befestigt ist ( MSj ) oder ein Lastkraftwagen, bei dem der geschlossene Raum (EF) eine Karosserie oder ein Anhänger ist, der zumindest teilweise aus Metall besteht und eine obere Wand umfasst, die ein Dach definiert, und eine Innenfläche umfasst, an der jede Metaoberfläche ( MSj ) befestigt ist.

## Claims

1. Detection device (DD) for a system (S) comprising a closed space (EF) with a metallic environment and comprising at least one object (0) provided with a wave transmitter/receiver identification element (EI), said device (DD) comprising an identification reader (LI) exchanging messages with said identification element (EI), via at least one antenna (AER) transmitting/receiving waves and intended to be installed in said closed space ( EF), in order to detect its presence, **characterized in that** it further comprises at least one metasurface ( MSj ) intended to be installed in said closed space (EF) and configured so as to reflect according to at least a first chosen law of waves coming from said antenna (AER) and intended for said identification element (EI) and according to at least a second chosen law of waves coming from said identification element (EI) and intended for said antenna (AER), and **in that** each metasurface ( MSj ) is configurable, and **in that** it comprises a calculator (CA) comprising at least one processor (PR) and at least one memory (MD) arranged to carry out the operations consisting of determining each first law and each second law as a function of said metallic environment and a configuration of said closed space (EF), then to determine each configuration of said configurable metasurface ( MSj ) as a function of said first and second determined laws, then to trigger an establishment of each configuration by said metasurface configurable ( MSj ).

2. Device according to claim 1, **characterized in that** said processor (PR) and said memory (MD) are arranged to carry out the operations consisting of determining at least two first laws and a second law as a function of said metallic environment and said configuration of the closed space (EF), then determining a first configuration of said configurable metasurface ( MSj ) as a function of one of said first determined laws and said second determined law and a second configuration of said configurable metasurface ( MSj ) as a function of the other of said first determined laws and said second determined law, then to trigger successive establishments of said first and second configurations by said configurable metasurface ( MSj ).

3. Device according to claim 1 or 2, **characterized in that** said processor (PR) and said memory (MD) are arranged, in the event of opening **of at least one** door (PC) controlling access to said closed space (EF), to carry out the operations consisting of determining a third law of reflection of waves coming from said antenna (AER) towards a zone comprising said access and a fourth law of reflection of waves coming from said zone comprising access towards said antenna (AER), then to determine a configuration of said configurable metasurface ( MSj ) according to said third and fourth determined laws, then to trigger an establishment of this configuration by said configurable metasurface ( MSj ).

4. Device according to one of claims 1 to 3, **characterized in that** each first law is intended to cause a reflection of said waves which is chosen from a reflection in successive directions parallel to each other and constituting generators of a cylinder of revolution d a ray chosen by at least one chosen zone of said metasurface ( MSj ) and a reflection in a single direction from chosen zones of said metasurface ( MSj ) which are aligned on a chosen straight line.

5. Device according to one of claims 1 to 4, **characterized in that** said waves have frequencies belonging to the radio frequency domain.

6. System (S) comprising a closed space (EF) with a metallic environment, **characterized in that** it comprises at least one detection device (DD) according to one of the preceding claims.

7. System according to claim 7, **characterized in that** it constitutes a vehicle.

8. System according to claim 8, **characterized in that** it constitutes a utility vehicle in which said closed space (EF) is defined by an at least partially metallic body and comprising an upper wall defining a roof and comprising an internal face on which is secured each metasurface ( MSj ), or a truck in which said closed space (EF) is a body or trailer at least partially metallic and comprising an upper wall defining a roof and comprising an internal face on which each metasurface ( MSj ) is secured.
